# EUROPEAN PATENT APPLICATION

(11) **EP 3 828 972 A1**
(43) Date of publication of application: **02.06.2021**
(21) Application number: 19211719.0
(22) Date of filing: 27.11.2019
(51) Int. Cl.: H01M 4/90, B01J 23/54, B01J 23/62, C01B 3/00, H01M 4/92

(54) **CHIRAL CRYSTALS FOR WATER ELECTROLYSIS AND FUEL CELLS**

(71) Applicant: Max-Planck-Gesellschaft zur Förderung der Wissenschaften e.V., 80539 München (DE)
(72) Inventor: LI, Guowei, 01069 Dresden (DE); MANNA, Kaustuv, New Delhi - 110 016 (IN); SUN, Yan, 01187 Dresden (DE); FELSER, Claudia, 06118 Halle (DE)
(74) Representative: Schweitzer, Klaus

(57) **Abstract**

The present invention is directed to the use of chiral compounds which crystallize in Space Group 198 (*P2₁3*) and which have the formula AB (I) or ABC (II) as catalysts for electrochemical reactions, specifically for HER and OER and for fuel cells.

## Description

### BACKGROUND

Chirality - or "handedness" - is a geometric property of some molecular systems and is of great importance for the design of new drugs and many other key biological molecules. A molecule is chiral if it cannot superpose its mirror image. It has recently been found that some inorganic three-dimensional crystals are also characterized with handedness in the absence of operations such as inversion, mirror or other rotoinversion symmetries. These compounds exhibit chirality-dependent physical properties such as surface adsorption, spin hall effect, and optical response.

Crystal systems can be classified into 230 Space Groups according to the distinctive features of space symmetry. 22 of them contain at least one screw axis and are always chiral even though the asymmetric unit is achiral. Well-known examples of chiral structures are cubic structures of Space Group (SG) 198, *P2₁3* such as FeSi, CoSi, and AlPt. This family of compounds exhibits a variety of properties such as superconductivity, long-range magnetic order, and magnetic skyrmions. They are of great fundamental interest as well as promising candidates for electronic devices, surface reactions, and spintronics applications. Recently, experiments confirmed that electron transport through a chiral system depends on the electron spin orientation.

Water electrolysis and fuel cells have recently received great attention because they are believed to be one of the best strategies of storing and transporting renewable energy with hydrogen as the intermediate. Water electrolysis is a process that converts water into its elements H₂ and O₂ through hydrogen evolution reaction (HER) and oxygen evolution reaction (OER). Full cells can produce electric current and heat by electrochemical conversion of H₂ and O₂. In this process, hydrogen atoms are oxidized and react with oxygen atoms to form water through the hydrogen oxidation reaction (HOR) and oxygen evolution reaction (ORR). All these reactions require the use of catalysts to lower the reaction energy barriers and speeding the reaction kinetics. Up to today, noble metals such as Pt and Ir are the only choice for commercial applications. The development of catalysts with fewer Pt loading or even without the use of noble metals is an ongoing challenge.

### PRIOR ART

EP2197819B1 discloses a catalyst for selective hydrogenation of unsaturated hydrocarbon compounds. The catalyst comprises a binary palladium gallium intermetallic compound, as well as the corresponding mixture of elements.

EP2060323A1 discloses the use of the optionally supported ordered intermetallic palladium gallium compounds as catalysts. These catalysts can be used for the selective hydrogenation of an alkyne, such as ethyne, to produce the corresponding alkene.

WO1993012879A1 provides a catalyst for the dehydrogenation of light paraffin. The catalyst comprises 0.3 to 5 wt.% Ga and 0.1 to 5 wt.% Pt on a spinel-type support material. The catalyst is called PtGa but is a mixture of Pt and Ga elements, rather than the compound PtGa with a defined crystal structure.

J. Prinz, et al., J Phys. Chem. C, 2014, 118, 12260 and J. Prinz, et al., J. Am. Chem. Soc. 2014, 136 reported that the crystal surface of the chiral compound PdGa influences the molecular adsorption and selectivity. The theoretical calculations confirm that some reactions such as the hydrogenation of acetylene (C₂H₂) to ethylene (C₂H₄), have different reaction rates on different chiral surfaces. The authors only show the conversion of C₂H₂ to ethylene C₂H₄, electrochemical catalysis is not disclosed.

Niels B.M. Schröter, et al, arXiv: 1907.08723 [cond-mat.mes-hall] observed the topological surface states in chiral crystalline PdGa. They proposed that enantioselective catalytic reactions of chiral molecules may be caused by the large surface electronic density of states of the Fermi-arcs in the chiral crystals. The authors only experimentally confirmed the existence of ultra-long Fermi arcs, electrocatalysis is not mentioned.

Niels B.M. Schröter, et al, Nat. Phys. 2019, 15, 759 reported that AlPt is a structurally chiral topological semimetal with multifold band crossings and long Fermi arcs surface states. Takane, D. et al. Phys. Rev. Lett. 2019, 122, 076402 observed the same phenomena in the chiral crystal CoSi. Both of these papers confirmed the topology character of the chiral crystals and the existence of long Fermi arc. There is no disclosure of a potential application as catalysts for electrochemical reactions.

U. A. Paulus et al., J. Phys. Chem. B 2002, 106, 4181; Alfred B. Anderson et al, J. Phys. Chem. B 2005, 109, 1198 reported that Pt-based alloys such as PtNi, Pt₃Ni, PtCo, Pt₃Co are good catalysts for fuel cells. However, these alloys are solid solutions, rather than ordered phases (or intermetallic compounds); i.e. they do not exhibit a defined crystal structure and have no chirality.

### OBJECT OF THE INVENTION

It was an object of the present invention to provide improved catalysts for water electrolysis specifically for the hydrogen evolution reaction (HER) and oxygen evolution reaction (OER), as well as full cells. It was a further object of the present invention to provide such improved catalysts with a reduced amount of, preferably with no noble metals such as Pt, Pd or Ir.

### SUMMARY OF THE INVENTION

The present invention provides a solution to the above object and is directed to the use of chiral compounds which crystallize in Space Group 198 (*P2₁3*) and which have the formula AB (I) or ABC (II) as catalysts for electrochemical reactions, specifically for HER and OER and for fuel cells.

In formula (I)
- A: is selected from a transition metal of IUPAC group 7, 8, 9, 10, and 11; and
- B: is selected from an element of IUPAC group 2, 13, 14, or 15.

In formula (II)
- A: is selected from a transition metal of IUPAC group 7, 8, 9, 10 or 11; and
- B: is selected from an element of IUPAC group 1, 2 or 3; and
- C: is selected from an element of IUPAC group 13, 14, 15, or 16.

Unlike traditional intermetallic alloys such as PtNi, Pt₃Ni, PtCo or Pt₃Co investigated by U. A. Paulus et al. or Alfred B. Anderson et al, the compounds according to the present invention have well-defined crystal structures and composition and are chiral. As a crystal they can be used directly as an electrode and catalyst for water splitting reactions and fuel cells; in powder form, they can e.g. be deposited onto a conductive electrode. The catalysts show remarkable performance as catalysts, with low overpotentials, and high electrochemical stability over time. The catalysts according to the present invention have a larger intrinsic catalytic ability than pure Pt at the same overpotential. Additionally, these compounds exhibit high chemical stability and durability to allow for a stable and extended lifetime for water splitting reactions and fuel cells, so that they can produce hydrogen and power continuously in industrial applications.

### BRIEF DESCRIPTION OF THE DRAWINGS

- Figure 1:: Crystal structure of chiral compounds with the formula AB.
- Figure 2:: Crystal structure of chiral compounds with the formula ABC.
- Figure 3:: Photo of crystals of the chiral compounds as the catalyst.
- Figure 4:: HER polarization curves of 20% Pt/C and the chiral catalysts PdGa, RhSi, AlPt, and AlGa.
- Figure 5:: HER polarization curves of the chiral catalysts AlPt and AlGa in a wider overpotential regime.
- Figure 6:: Tafel slope analysis of 20% Pt/C and the chiral catalysts PdGa, RhSi, AlPt, and AlGa.
- Figure 7:: Comparison of turnover frequency between chiral catalysts of the present invention and noble metal-based catalysts.
- Figure 8:: Current - time (I - t) chronoamperometric response of the electrocatalyst AlPt at a constant overpotential.

### DETAILED DESCRIPTION OF THE INVENTION

The present invention is directed to the use of chiral compounds which crystallize in Space Group 198 (*P2₁3*) and which have the formula AB (I) or ABC (II) as catalysts for electrochemical reactions, specifically for HER and OER and for fuel cells.

In formula (I)
- A: is selected from a transition metal of IUPAC group 7, 8, 9, 10 or 11; and
- B: is selected from an element of IUPAC group 2, 13, 14 or 15.

Preferably,
- A: is selected from Fe, Co, Mn, Pt, Pd, Ru, Rh, Ir or Au, and
- B: is preferably selected from Mg, Al, Ga, Si and Ge.

More preferably the chiral crystals with the formula AB crystallizing in Space Group 198 (*P2₁3*) are selected from the group consisting of CoSi, PdGa, PtAl, PtGa, PtMg, RhSi and RuAI.

In formula (II)
- A: is selected from a transition metal of IUPAC group 7, 8, 9, 10 or 11; and
- B: is selected from an element of IUPAC group 1, 2 or 3; and
- C: is selected from an element of IUPAC group 13, 14, 15, or 16.

In a preferred embodiment
- A: is selected from Fe, Co, Ni, Mn, Pt, Pd, Ru, Rh, Ir or Au, and
- B: is selected from Ba, Ca, Sr, Bi, Sb, P or As, and
- C: is selected from S, Se, Te, Si, Ge or Sn.

More preferably the chiral crystals with the formula of ABC crystallizing in Space Group 198 (*P2₁3*) are selected from the group consisting of RhBiSe, RhSbS, RhSbSe, RhPSe, IrBiS, IrBiSe, IrSbSe, IrPSe, IrSbS, NiSbSe, NiPS, PdBiSe, PdSbS, PdSbSe, PdSbTe, PtBiSe, PtSbS, and PtSbSe.

The compounds of the present invention crystallize in Space Group 198 (*P2₁3*). The Space Groups are defined and listed in the "International Tables for Crystallography" (Hahn, Th. (2002), Hahn, Theo (ed.), International Tables for Crystallography, Volume A: Space Group Symmetry, International Tables for Crystallography, A (5th ed.), Berlin, New York: Springer-Verlag, doi:10.1107/97809553602060000100, ISBN 978-0-7923-6590-7).

Various techniques can be used to make the compounds AB and ABC. In one exemplary method the crystalline chiral catalysts crystallizing in Space Group 198 (*P2₁3*) according to the present invention are grown from its melt of elements using the self-flux technique. In this method, first, a polycrystalline ingot is prepared using e.g. the arc melt technique with the stoichiometric mixture of high purity elements of A and B, or A, B and C. Then the obtained ingots are crushed to obtain a powder which is then heated to a temperature between 1100-1600 °C and then cooled to room temperature at a rate of 1-5 °C /h. This reaction is preferably performed in a sealed tube, e.g. a quartz tube, preferably under reduced pressure of between 10⁻⁴ to 10⁻⁵ Pa.

### GENERAL PROPERTIES

Due to the absence of symmetry operations such as inversion, mirror or other rotoinversion symmetries, compounds in Space Group 198 are chiral; they contain at least one screw axis which is not the 2₁-screw axis. This structural chirality leads to unique physical properties.

The chiral crystals of the present invention exhibit a very low resistivity at room temperature (10⁻⁵-10⁻⁴ Ω cm). This favors the electron transfer between the catalyst and electrolyte. Very surprisingly, the present electrocatalysts show an even higher catalytic activity than Pt in the water-splitting reaction. The overpotential to deliver a current density of 10 mA/cm² is only 13.3 mV for a PtGa crystal. The Tafel slope is as low as 16 mV/dec. in acidic (pH = 0) medium. All these values are lower than that of a nano Pt/C catalyst (25 mV @10 mA/cm² with Tafel slope of 33 mV/dec.). The chiral crystal catalysts also exhibit excellent electrochemical stability of up to 100 h when working at high current densities of 200 mAcm⁻².

The chiral compounds can be in the form of a single crystal and used directly as both electrodes and catalysts. Likewise the chiral compounds can be provided as powders which are then deposited on a conductive substrate such as Ni foam, carbon cloth, or they can be mixed with graphene to increase the mobility and conductivity.

### EXAMPLES

The invention is now explained in more detail with reference to examples.

For the synthesis of PtAl crystals, PtAl polycrystalline powders were first prepared by arc-melting a stoichiometric amount of Al and Pt metals. The ingot was crushed into powder and placed in an aluminum tube that was sealed inside a tantalum tube. Then, the tube was heated in an argon atmosphere up to 1,600 °C and then cooled to 400 °C at a cooling rate of 0.5 °C min⁻¹. Finally, the sample was annealed at 1,000 °C for 6 days followed by slow cooling to room temperature at a speed of 1 °C min⁻¹.

Single crystals of RhSi were grown from a melt using the vertical Bridgman crystal growth technique (see e.g.: "Vertical Bridgman Technique and Dewetting", Thierry Duffar, Lamine Sylla, https://doi.org/10.1002/9781444320237.ch6). A slight excess of Si was used to ensure flux growth inside the Bridgman ampoule. A polycrystalline ingot was prepared by pre-melting the highly pure constituents under an argon atmosphere using an arc furnace. The ingot was crushed into powder and placed into a home-made sharp-edged alumina tube. The tube was sealed inside a tantalum tube under an argon atmosphere and heated to 1,550 °C in a HTM Reetz Bridgman oven (Heating unit: LORA 1700-40-300-1). The whole setup was slowly pulled to the cold zone with a temperature of 1100 °C at a rate of 0.8 mm h⁻¹. Single crystals on average about 15 mm in length and about 6 mm in diameter were obtained.

For the synthesis of chiral crystals of PdGa and PtGa, the corresponding elements were mixed and ground together under an inert gas atmosphere. A polycrystalline ingot was prepared using arc melt technique. The ingot was then sealed in a quartz tube under reduced pressure of between 10⁻⁴ to 10⁻⁵ Pa. The entire quartz ampoule was first heated to 1100 °C, halted there for 12 h and then slowly cooled to 900 °C with a rate of 1.5 °C /h. Finally, the sample was cooled to 800 °C with a rate of 50 °C /h, annealed for 120 h and then cooled to 500 °C with a rate of 5 °C/h. Chiral crystals were then obtained by letting the sample cool down to room temperature.

The HER catalytic measurements were performed on an Autolab PGSTAT302N electrochemistry workstation (Metrohm Autolab BV, Utrecht, Netherlands) with a conventional three-electrode cell configuration. An Ag/AgCl (3 M KCI) electrode was used as the reference electrode, and a graphite rod was used as the counter electrode. The chiral crystals were attached to a Ti wire with silver paint and served as a working electrode. The electrolyte was an Ar saturated 0.5 M H₂SO₄ solution. Linear sweep voltammograms were recorded with a scan rate of 1 mV / S. The stability tests were performed at a constant overpotential. All potentials used in the examples were referenced to a reverse hydrogen electrode (RHE).

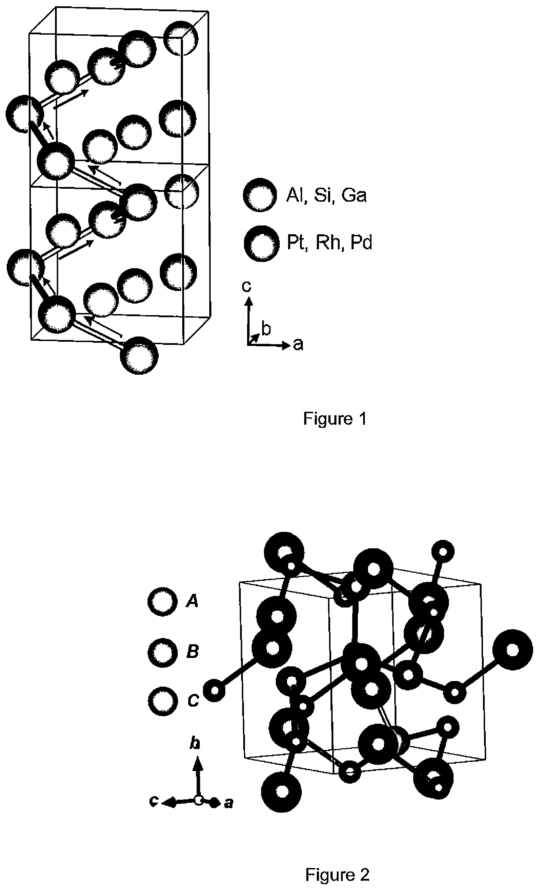

Figure 1 shows the crystal structure of chiral compounds with the formula of AB. The crystal crystallizes in the cubic Space Group 198 (*P2₁3*) and is polar along the (111) direction. Atom A (Pt, Pd, Ru, etc.) occupies the 4a position with x = 0.1358, and B (Al, Si, Ga, etc.) occupies 4a with x = 0.844. The atoms form a helix as guided by the arrows. This determines the chirality of the crystal.

Figure 2 shows the crystal structure of chiral compounds with the formula of ABC. This family of compounds likewise has a cubic structure with a noncentrosymmetric Space Group *P2₁3* (Space Group no 198). They adopt the NiSSb (Ullmanite) or *F*0₁ structure.

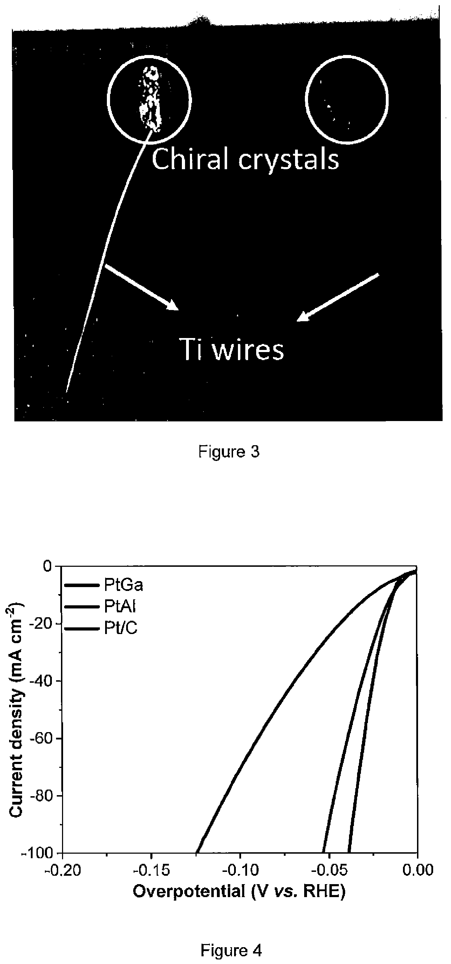

Figure 3 shows a photo of the crystalline chiral catalyst. The chiral crystal was attached to a Ti wire with silver paint. The device was heated to 70 °C for 5 h for drying. Then it served as a working electrode and HER catalyst.

Figure 4 shows the HER polarization curves for 20% Pt/C and the chiral catalysts AlPt and AlGa. The commercial Pt/C needs an overpotential of 25 mV to deliver a current density of 10 mA/cm². To deliver the same current density, chiral PtGa and PtAl single-crystals only need an overpotential of 13.3 and 14 mV, respectively.

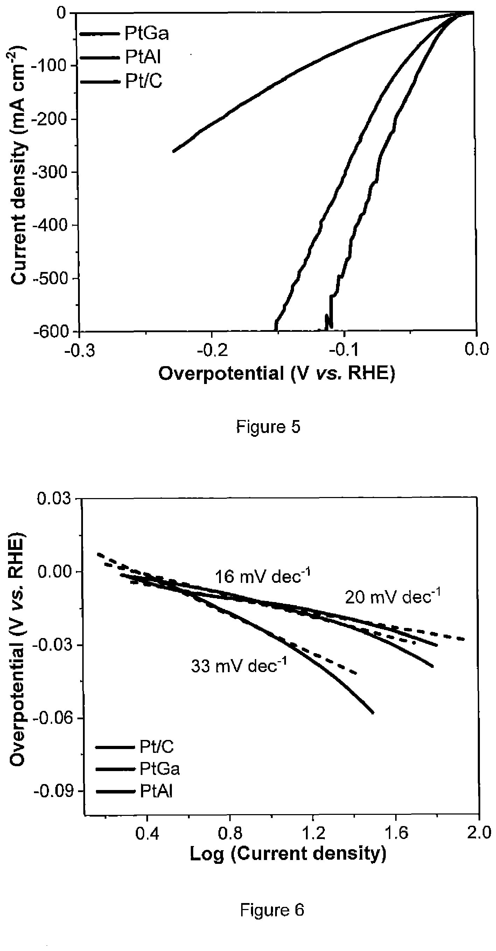

Figure 5 shows the HER polarization curves of the chiral catalysts AlPt and AlGa in a large overpotential regime. To achieve a current density of 600 mA/cm², the chiral crystals AlPt and AlGa need an overpotential of 150 and 118 mV, respectively. These experimental data demonstrate that these chiral crystals are highly active towards water splitting.

Figure 6 shows the Tafel slopes for the 20% Pt/C and the chiral catalysts AlPt, and AlGa by fitting the experimental data with the Butler-Volmer equation. The Tafel slope of the Pt/C catalyst is 33 mV/dec. However, AlPt and AlGa chiral catalysts have a much smaller Tafel slope of 16 and 20 mV/dec., respectively.

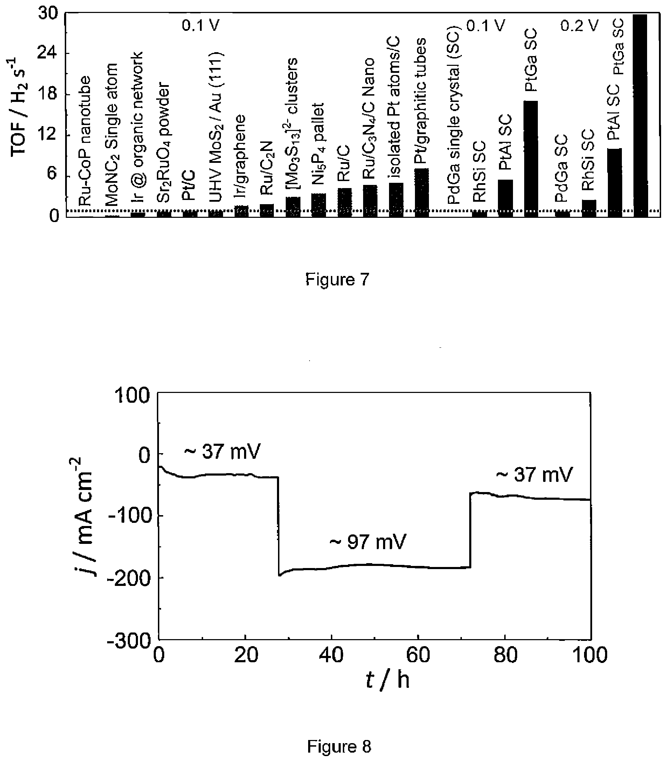

Figure 7 shows the comparison of turnover frequency between the chiral catalysts and noble metal-based catalysts. AlPt and AlGa chiral catalysts exhibit TOFs (per active site) of 5.6 and 17.1 s⁻¹, which is even higher than that of Pt (1 s⁻¹) at the overpotential of 100 mV. It can be clearly seen that the chiral crystals exhibit unprecedented TOFs for water splitting among catalysts based on noble metals and nanostructures.

Figure 8 shows the current - time (I - t) chronoamperometric response of an AlPt electrocatalyst at a constant overpotential. The chiral crystal delivered a stable current density of ∼ 35 and 200 mA cm⁻² at the overpotential of 35 and 97 mV respectively. This indicates the outstanding stability of the chiral crystal catalyst.

## Claims

1. Use of a chiral compound which crystallizes in Space Group 198 (*P2₁3*) and which has the formula AB (I) or ABC (II) as a catalyst for an electrochemical reaction, wherein
in formula (I)
A is selected from a transition metal of IUPAC group 7, 8, 9, 10, and 11; and
B is selected from an element of IUPAC group 2, 13, 14, or 15
and wherein
in formula (II)
A is selected from a transition metal of IUPAC group 7, 8, 9, 10 or 11; and
B is selected from an element of IUPAC group 1, 2 or 3; and
C is selected from an element of IUPAC group 13, 14, 15, or 16.

2. The use according to claim 1, wherein in formula (I)
A is selected from Fe, Co, Mn, Pt, Pd, Ru, Rh, Ir or Au, and
B is preferably selected from Mg, Al, Ga, Si and Ge.

3. The use according to claim 1 or 2, wherein the chiral crystal with the formula AB crystallizing in Space Group 198 (*P2₁3*) is selected from the group consisting of CoSi, PdGa, PtAl, PtGa, PtMg, RhSi and RuAI.

4. The use according to claim 1, wherein in formula (II)
A is selected from Fe, Co, Ni, Mn, Pt, Pd, Ru, Rh, Ir or Au, and
B is selected from Ba, Ca, Sr, Bi, Sb, P or As, and
C is selected from S, Se, Te, Si, Ge or Sn.

5. The use according to claim 1 or 2, wherein the chiral crystal with the formula of ABC crystallizing in Space Group 198 (*P2₁3*) is selected from the group consisting of RhBiSe, RhSbS, RhSbSe, RhPSe, IrBiS, IrBiSe, IrSbSe, IrPSe, IrSbS, NiSbSe, NiPS, PdBiSe PdSbS, PdSbSe, PdSbTe, PtBiSe, PtSbS, and PtSbSe.

6. An electrode for a HER or OER cell comprising a chiral compound which crystallizes in Space Group 198 (*P2₁3*) and which has the formula AB (I) or ABC (II), wherein
in formula (I)
A is selected from a transition metal of IUPAC group 7, 8, 9, 10, and 11; and
B is selected from an element of IUPAC group 2, 13, 14, or 15
and wherein
in formula (II)
A is selected from a transition metal of IUPAC group 7, 8, 9, 10 or 11; and
B is selected from an element of IUPAC group 1, 2 or 3; and
C is selected from an element of IUPAC group 13, 14, 15, or 16.

7. The electrode according to claim 6, wherein the chiral compound is provided as powder which is deposited on a conductive substrate or which is mixed with graphene.

8. An fuel cell comprising a chiral compound which crystallizes in Space Group 198 (*P2₁3*) and which has the formula AB (I) or ABC (II), wherein
in formula (I)
A is selected from a transition metal of IUPAC group 7, 8, 9, 10, and 11; and
B is selected from an element of IUPAC group 2, 13, 14, or 15
and wherein
in formula (II)
A is selected from a transition metal of IUPAC group 7, 8, 9, 10 or 11; and
B is selected from an element of IUPAC group 1, 2 or 3; and
C is selected from an element of IUPAC group 13, 14, 15, or 16.

9. A method for the manufacture of a chiral compound which crystallizes in Space Group 198 (*P2₁3*) and which has the formula AB (I) or ABC (II), wherein
in formula (I)
A is selected from a transition metal of IUPAC group 7, 8, 9, 10, and 11; and
B is selected from an element of IUPAC group 2, 13, 14, or 15
and wherein
in formula (II)
A is selected from a transition metal of IUPAC group 7, 8, 9, 10 or 11; and
B is selected from an element of IUPAC group 1, 2 or 3; and
C is selected from an element of IUPAC group 13, 14, 15, or 16
wherein first, a polycrystalline ingot from the stoichiometric mixture of high purity elements of A and B, or A, B and C is prepared using arc melt technique and wherein the obtained ingot is crushed to obtain a powder which is then heated to a temperature between 1100-1600 °C and then cooled to room temperature at a rate of 1-5 °C /h.
